# EUROPEAN PATENT APPLICATION

(11) **EP 4 475 616 A1**
(43) Date of publication of application: **11.12.2024**
(21) Application number: 23759333.0
(22) Date of filing: 27.02.2023
(51) Int. Cl.: H04W 74/08

(54) **DATA TRANSMISSION METHOD, TERMINAL, AND NETWORK SIDE DEVICE**

(30) Priority: 28.02.2022 CN 202210191428
(71) Applicant: VIVO MOBILE COMMUNICATION CO., LTD., Dongguan, Guangdong 523863 (CN)
(72) Inventor: LIU, Jiamin, Dongguan, Guangdong 523863 (CN); BAO, Wei, Dongguan, Guangdong 523863 (CN)
(74) Representative: Murgitroyd & Company
(86) International application number: PCT/CN2023/078544
(87) International publication number: WO 2023/160712

(57) **Abstract**

This application discloses a data transmission method, a terminal, and a network-side device, pertaining to the field of wireless communication technologies. The data transmission method in embodiments of this application includes: sending, by a first terminal, first target data on a common data radio bearer DRB based on a target mode; where the first target data is non-control plane data, the target mode includes any one of a two-step random access mode and a four-step random access mode, the common DRB is used for transmitting the non-control plane data by a plurality of terminals, and the plurality of terminals include the first terminal.

## Description

### CROSS-REFERENCE TO RELATED APPLICATIONS

The present invention claims priority to Chinese Patent Application No. 202210191428.3, filed with the China National Intellectual Property Administration on February 28, 2022 and entitled "DATA TRANSMISSION METHOD, TERMINAL, AND NETWORK-SIDE DEVICE", which is incorporated herein by reference in its entirety.

### TECHNICAL FIELD

This application pertains to the field of wireless communication technologies, and specifically, relates to a data transmission method, a terminal, and a network-side device.

### BACKGROUND

In the related art, when needing to report a data collection result to the network side, the terminal side needs to enter a connected state first and establish a corresponding signalling radio bearer (Signalling Radio Bearer, SRB) and/or data radio bearer (Data Radio Bearer, DRB), and then performs data reporting by using a data transmission pipeline dedicated to the terminal.

However, in the aforementioned process, there are problems such as large signaling overheads and large data transmission delay caused by terminal state switching and bearer establishment.

### SUMMARY

Embodiments of this application provide a data transmission method, a terminal, and a network-side device, which can resolve the problems of large signaling overheads and large data transmission delay in related technologies.

According to a first aspect, a data transmission method is provided, including: sending, by a first terminal, first target data on a common data radio bearer DRB based on a target mode, where the first target data is non-control plane data; and the target mode includes any one of a two-step random access mode and a four-step random access mode, the common DRB is used for transmitting the non-control plane data by a plurality of terminals, and the plurality of terminals include the first terminal.

According to a second aspect, a data transmission method is provided, including: receiving, by a network-side device, first target data that is sent by a first terminal on a common data radio bearer DRB based on a target mode; where the first target data is non-control plane data, the target mode includes any one of a two-step random access mode and a four-step random access mode, the common DRB is used for transmitting the non-control plane data by a plurality of terminals, and the plurality of terminals include the first terminal.

According to a third aspect, a data transmission apparatus is provided, including: a first transmission module, configured to send first target data on a common data radio bearer DRB based on a target mode, where the first target data is non-control plane data; and the target mode includes any one of a two-step random access mode and a four-step random access mode, the common DRB is used for transmitting the non-control plane data by a plurality of terminals, and the plurality of terminals include the first terminal.

According to a fourth aspect, a data transmission apparatus is provided, including: a second transmission module, configured to receive first target data that is sent by a first terminal on a common data radio bearer DRB based on a target mode; where the first target data is non-control plane data, the target mode includes any one of a two-step random access mode and a four-step random access mode, the common DRB is used for transmitting the non-control plane data by a plurality of terminals, and the plurality of terminals include the first terminal.

According to a fifth aspect, a terminal is provided, where the terminal includes a processor and a memory, and the memory stores a program or instructions executable on the processor. When the program or the instructions are executed by the processor, the steps of the method according to the first aspect are implemented.

According to a sixth aspect, a terminal is provided, including a processor and a communication interface, where the communication interface is coupled to the processor, and the processor is configured to run a program or instructions to implement the steps of the method according to the first aspect.

According to a seventh aspect, a network-side device is provided, where the network-side device includes a processor and a memory, and the memory stores a program or instructions executable on the processor. When the program or the instructions are executed by the processor, the steps of the method according to the second aspect are implemented.

According to an eighth aspect, a network-side device is provided, including a processor and a communication interface, where the communication interface is coupled to the processor, and the processor is configured to run a program or instructions to implement the steps of the method according to the second aspect.

According to a ninth aspect, a wireless communication system is provided, including: a terminal and a network-side device, where the terminal may be configured to perform the steps of the data transmission method according to the first aspect, and the network-side device may be configured to perform the steps of the data transmission method according to the second aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the steps of the method according to the first aspect or implement the steps of the method according to the second aspect.

According to a twelfth aspect, a computer program/program product is provided, where the computer program/program product is stored in a storage medium, and the computer program/program product is executed by at least one processor to implement the steps of the method according to the first aspect or the steps of the method according to the second aspect.

In the embodiments, the first terminal sends the first target data on the common DRB based on the target mode, thereby avoiding establishment of a terminal-specific Uu interface connection and terminal state switching. This can reduce signaling overheads, shorten a data transmission delay, and also improve the transmission efficiency.

### BRIEF DESCRIPTION OF DRAWINGS

FIG. 1 is a schematic structural diagram of a wireless communication system according to an example embodiment of this application;
FIG. 2 is a schematic flowchart of a data transmission method according to an example embodiment of this application;
FIG. 3 is a schematic flowchart of a data transmission method according to another example embodiment of this application;
FIG. 4 is a schematic flowchart of a data transmission method according to still another example embodiment of this application;
FIG. 5 is a schematic flowchart of a data transmission method according to yet another example embodiment of this application;
FIG. 6 is a schematic flowchart of a data transmission method according to still yet another example embodiment of this application;
FIG. 7 is a schematic structural diagram of a data transmission apparatus according to an example embodiment of this application;
FIG. 8 is a schematic structural diagram of a data transmission apparatus according to another example embodiment of this application;
FIG. 9 is a schematic structural diagram of a terminal according to an example embodiment of this application; and
FIG. 10 is a schematic structural diagram of a network-side device according to an example embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first", "second", and the like are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the contextually associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

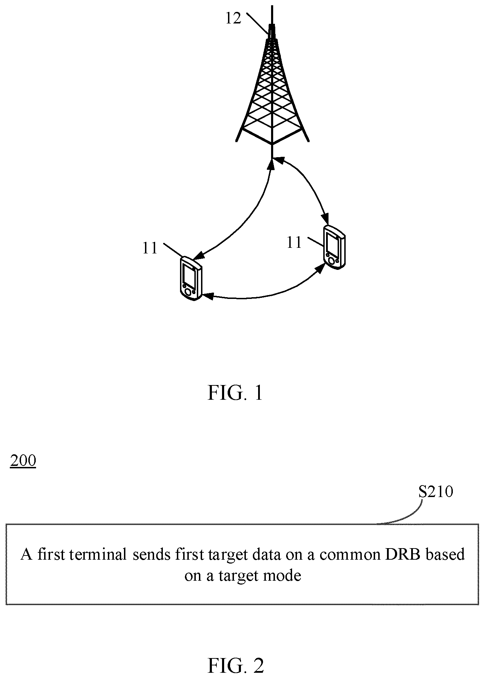

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device, WD), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wrist band, smart clothing, and the like. It should be noted that a specific type of the terminal 11 is not limited in the embodiments of this application. The network-side device 12 may include an access network device or a core network device, where the access network device 12 may also be referred to as a radio network-side device, a radio access network (Radio Access Network, RAN), a radio access network function, or a radio access network unit. The network-side device 12 may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following describes in detail the technical solution provided in the embodiments of this application by using some embodiments and application scenarios thereof with reference to the accompanying drawings.

As shown in FIG. 2, FIG. 2 is a schematic flowchart of a data transmission method 200 according to an example embodiment of this application. The method may be, but is not limited to, performed by a first terminal, and specifically may be performed by hardware and/or software installed in the first terminal. In this embodiment, the method 200 may include at least the following steps.

S210: The first terminal sends first target data on a common DRB based on a target mode.

The first target data is non-control plane data, for example, the first target data may include user plane data, data plane data, or the like.

The common DRB is used for transmitting non-control plane data by a plurality of terminals, and the plurality of terminals include the first terminal. In this embodiment, using the first terminal as an example, a manner of performing data transmission by the first terminal based on the common DRB can be understood as a connectionless or weakly connected data plane transmission manner adopted by the first terminal. The connectionless or weakly connected data plane transmission mode means that when needing to send data, the first terminal may implement data transmission with no need to enter a radio resource control (Radio Resource Control, RRC) connected state or RRC-inactive (inactive) state (that is, in a case that the first terminal has no terminal-specific connection to a network-side device). That is, in this embodiment, the common DRB is used for data transmission, which can resolve the problems of large signaling overheads and large time delay caused by establishment of a terminal-specific Uu interface connection and state switching in the related art, and effectively improve the data transmission efficiency.

Certainly, considering that the common DRB is used for transmission of a plurality of terminals (including the first terminal), in this embodiment, the common DRB may be occupied by the plurality of terminals (including the first terminal) in a contention-based manner, and then the network-side device determines whether the contention is successful (that is, whether the data transmission is successful). That is, the first terminal may send the first target data on the common DRB based on any one of the two-step random access mode and the four-step random access mode. Implementation processes of the two-step random access mode and the four-step random access mode are not described again in this embodiment.

In addition, it should be noted that in this embodiment, for transmission of the first target data by using the common DRB, user privacy may alternatively be removed or user identification information may be hidden, so that the network-side device does not know which sender of the first target data is, so as to fully conceal personal information of the terminal and ensure privacy security of the terminal. For example, in this embodiment, the first target data transmitted based on the common DRB does not carry or correspond to identification information, where the identification information is used by the network-side device to identify the first terminal, which is a sender of the first target data. The identification information may be an S-temporary mobile subscription identifier (S-Temporary Mobile Subscription Identifier, S-TMSI), a telephone number, a personal identity, a terminal local identifier, or the like.

Correspondingly, if the network-side device is an access network device (such as a base station), after receiving the first target data, the access network device may alternatively transmit the first target data to a core network device based on an end-to-end common pipeline between the core network device and the access network device (such as centralized unit-user plane function (Centralized Unit-User Plane Function, CU-UPF), gNB-UPF, or CU-data plane function (Data Plane Function, DPF, a core network data anchor point for processing data plane), or a gNB-DPF). The first target data transmitted based on the common pipeline either does not carry or correspond to identification information, and the identification information is used by the core network device to identify the first terminal, thereby further ensuring the privacy of the first terminal.

Creation of the common pipeline may be similar to the existing signaling procedure of the gNB and an access and mobility management function (Access and Mobility Management Function, AMF)/UPF, such as the signaling process of establishment (Establishment), modification (modification), release (release), and management (management) of an N2 common channel, so as to implement establishment, modification, release, and management of the N2 common pipeline.

In this embodiment, the first terminal sends the first target data on the common DRB based on the target mode, which can avoid establishment of a terminal-specific Uu interface connection and terminal state switching. This can reduce signaling overheads, shorten a data transmission delay, and also improve the transmission efficiency. In addition, the privacy of the terminal can be guaranteed by hiding the user identification information.

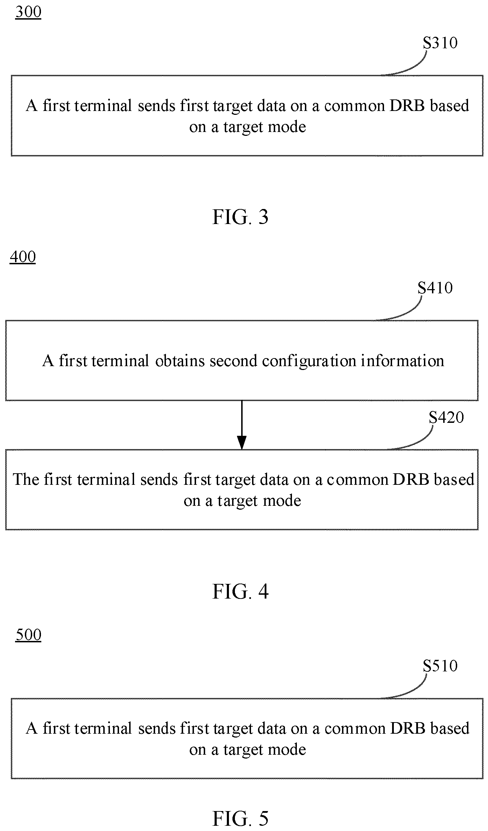

As shown in FIG. 3, FIG. 3 is a schematic flowchart of a data transmission method 300 according to an example embodiment of this application. The method may be, but is not limited to, performed by a first terminal, and specifically may be performed by hardware and/or software installed in the first terminal. In this embodiment, the method 300 may include at least the following steps.

S310: The first terminal sends first target data on a common DRB based on a target mode.

The first target data is non-control plane data, the target mode includes any one of a two-step random access mode and a four-step random access mode, the common DRB is used for transmitting the non-control plane data by a plurality of terminals, and the plurality of terminals include the first terminal.

It can be understood that for the implementation process of S310, in addition to reference to the related description in the method embodiment 200, this embodiment describes the process that the first terminal sends the first target data on the common DRB based on the two-step random access mode or the four-step random access mode. The content is as follows.

### (1) Two-step random access channel (2-step Random Access Channel, 2-step RACH) mode

In the two-step random access procedure adopted in this embodiment, the first target data on the common DRB is carried by a message (Message, Msg) A uplink resource, so as to implement transmission of the first target data. A time-domain position of an MsgA in the two-step random access mode is determined based on the action trigger time of the first target data. The action trigger time may be a time at which the first terminal needs to send the first target data, a time at which the first target data is generated, or a time at which a data reporting requirement or higher-layer data is generated, or the like, which is not limited herein.

For example, considering that sending of the first target data on the common DRB based on the two-step random access mode provided in this embodiment has different requirements from the MsgA in the two-step random access mode provided in the related art. For example, the MsgA in the two-step random access mode provided in the related art is mainly used for purposes of obtaining an uplink timing advance (Timing Advance, TA), sending an initial uplink signaling request (such as an RRC setup request (Setup Request), an RRC resume request (Resume Request), or an RRC reestablish request (Reestablish Request)) to the network-side device, and requesting the network-side device for uplink scheduling. In addition, a size of data that can be sent on an uplink resource (Uplink resource, UL resource) of the MsgA is limited, generally being a relatively small data packet such as 56 bits (bit) or 72 bits. However, the data transmission on the common DRB implemented in this embodiment may involve a larger or smaller data size. In addition, the two have completely different requirements, and therefore, should be transmitted on independent resources, respectively. That is, the MsgA in the related art has its own physical random access channel (Physical Random Access Channel, PRACH) resource configuration and UL resource configuration; however, in this embodiment, the MsgA used for transmission on the common DRB also needs to have an independent PRACH and UL resource configuration, and for a size of the UL resource, sizes of various DRBs need to be considered. Certainly, in a case that the terminal is out of synchronization and the link quality is poor, sending of large data packets may have strong interference to the system, and the uplink resource of the MsgA should not be excessively large.

Based on this, in this embodiment, several different DRB sizes may be configured, and a reference signal received power (Reference Signal Received Power, RSRP) threshold to be reached is set for each size. In this way, when the link quality between the terminal and the network-side device (such as the base station) is good enough and the RSRP is higher than a corresponding threshold, the terminal is allowed to use a data RB (Resource Bearer) MsgA UL resource with a specific size.

That is, to improve reliability of data transmission, if there are a plurality of uplink resources with different resource sizes, the uplink resources correspond to resource usage conditions, and the resource usage conditions are determined at least based on the RSRPs. That is, in this embodiment, resource usage conditions can be configured for uplink resources of different sizes, so that only a terminal that meets a resource usage condition can use a corresponding resource to transmit the first target data on the common DRB.

Assuming that the resource usage conditions are determined based on RSRPs, RSRP1 corresponds to uplink resource 1, RSRP2 corresponds to uplink resource 2, RSRP3 corresponds to uplink resource 3, RSRP4 corresponds to uplink resource 4, ..., and so on, when the RSRP of the first terminal is greater than RSRP2 and less than RSRP3, the shared resource 2 can be then used. It can be understood that the RSRP may be an RSRP from the terminal (such as the first terminal) to the serving cell, and different RSRP thresholds may be set for different resource sizes.

Certainly, for a plurality of uplink resources, it is also possible to set resource usage conditions only for part of the plurality of uplink resources, which is not limited herein.

Further, considering that the uplink resource corresponding to the MsgA and selected by the first terminal is generally related to a time (the action trigger time of the first target data), during selection of the uplink resources corresponding to the MsgA (that is, the target uplink resources) in this embodiment, an uplink resource whose time domain information is closest to the action trigger time of the first target data may be selected from at least one uplink resource as the target uplink resource; or a target time window closest to the action trigger time of the first target data may be first determined and at least one uplink resource with time domain information being within the target time window is selected from the at least one uplink resource as the target uplink resource. The target uplink resource corresponds to the MsgA or the Msgl, that is, the first terminal uses the target uplink resource to send the first target data on the common DRB based on the target mode, so as to avoid a problem such as resource collision. When there are a plurality of uplink resources with time domain information being within the target time window, one or more uplink resources may be selected from the plurality of uplink resources as the target uplink resource in a random manner or in a priority order.

It should be noted that during selection of the target uplink resource, a condition such as whether the size of the selected target uplink resource matches the size of the common DRB can be further considered, which is not limited herein.

Then, the first terminal sends a random access preamble (Random Access Preamble) on the selected PRACH resource of the MsgA, and sends the first target data on the common DRB on the corresponding target uplink resource.

Correspondingly, the network-side device (such as the access network device) successfully receives the preamble and the first target data that are sent by the first terminal, and then returns an MsgB to the first terminal based on a specified relationship between the MsgA and the MsgB. The MsgB carries at least first contention resolution related information, and the first contention resolution related information is determined by the network-side device based on at least part of the received first target data. For example, the network-side device uses an agreed number of bytes in the first target data sent on the MsgA uplink resource as the first contention resolution related information and adds it to the MsgB, so that the first terminal can compare the received first contention resolution related information in the MsgB with the sent first target data, and if the two are the same or match, the first terminal determines that the first target data is sent successfully, that is, the network-side device provides a successful response.

For the aforementioned contention resolution method, if the first terminal determines that the data transmission failed this time, the first terminal can adopt a manner such as transmission power climbing or random delay in a next attempt to improve the success rate of data transmission and reduce the probability of collision here.

In addition, in one implementation, for the two-step random access mode provided in this embodiment, the MsgB may also carry at least one of the following (11) to (14).

(11) TA, where the TA is used for establishing and maintaining uplink synchronization; and certainly, the TA is also of great significance for the first terminal to send other uplink data.

(12) Uplink resource allocation information, where the uplink resource allocation information is used for sending second target data on the common DRB; and an action trigger time of the second target data is after the action trigger time of the first target data. For example, if the first terminal needs to perform multiple transmissions, after the 1st transmission based has been performed based on the two-step random access mode, the first terminal may schedule, based on the uplink resource allocation information, subsequent data (such as the second target data) following the 1st transmission.

(13) First temporary radio network temporary identifier (Radio Network Temporary Identifier, RNTI), used for scheduling at least one piece of second target data on the first terminal, where the action trigger time of the second target data is after the action trigger time of the first target data. For example, if the first terminal needs to perform multiple transmissions, after the 1st transmission based has been performed based on the two-step random access mode, the first terminal may schedule, based on the first temporary RNTI, subsequent data (such as the second target data) following the 1st transmission.

(14) First configuration information, where the first configuration information includes at least one of transmission power control (Transmission power control, TPC) and a hybrid automatic repeat request (Hybrid Automatic Repeat Request, HARQ) feedback (Feedback) related indication.

Certainly, one or more of the aforementioned information included in the MsgB can be implemented through protocol prescription or higher-layer configuration, which is not limited herein.

### (2) Four-step random access channel (4-step RACH) mode

In the four-step random access procedure adopted in this embodiment, the first step is that the first terminal sends a preamble code through Msgl, which is mainly used to obtain uplink synchronization; the second step is that the network-side device sends TA information, uplink grant (UL grant) information, and temporary ID information (such as the second temporary RNTI) to the first terminal through Msg2 after receiving the preamble; the third step is that after receiving the Msg2, the first terminal adjusts its uplink transmission timing based on the TA information, and uses an allocated UL grant resource to send the first target data on the common DRB through Msg3; and the fourth step is that after receiving the first target data, the network-side device (such as the base station) confirms to the first terminal by taking out N bits in part of the first target data sent in the third step and having it carried in Msg4 as the second contention resolution related information to return to the first terminal, so that the first terminal may compare the received second contention resolution related information in the Msg4 with the sent first target data. If the two are the same or match, the first terminal determines that the first target data is successfully sent, that is, the network-side device provides a successful response. In addition, if another terminal than the first terminal in the plurality of terminals also performs transmission on the common DRB in a contention manner, the another terminal is declared to have failed in the contention and needs to find another occasion for retransmission.

That is, in this embodiment, the Msg4 carries at least the second contention resolution related information, and the second contention resolution related information is determined by the network-side device based on at least part of the received first target data. In addition, the second temporary RNTI carried in the Msg2 is used for scheduling at least one piece of second target data on the first terminal. For example, if the first terminal needs to perform multiple transmissions, after the 1st transmission based has been performed based on the four-step random access mode, the first terminal may schedule, based on the second temporary RNTI, subsequent data (such as the second target data) following the 1st transmission.

Certainly, in the aforementioned four-step random access procedure, because the data transmission on the common DRB provided in this embodiment is very different from the 4-step RACH in the related art, different resources are required for distinguishing, that is, resource configurations for transmitting the preamble in the first step are respective independent configurations. In addition, because there may be different data sizes and transmission requirements for the common DRB, different resources (such as time-frequency resources or preamble packets) may be used in this embodiment to correspond to different data sizes or different transmission requirements. Based on this, when selecting the transmission in the first step, the first terminal may select a corresponding resource based on at least one of its own transmission requirement, a data size, and its own link status, for data transmission on the common DRB (for example, when an RSRP from the first terminal to the base station is lower than a configured threshold, it is not allowed to send data with a specific size, and only when the RSRP from the UE to the base station is greater than or equal to the configured threshold, it is allowed to send data with a specific size). That is, similar to the two-step random access mode, if there are a plurality of uplink resources with different resource sizes, the uplink resources have corresponding resource usage conditions, and the resource usage conditions are determined at least based on the RSRP, transmission requirement, data size, link condition, or the like.

Further, in this embodiment, considering that the uplink resource corresponding to the Msg1 and selected by the first terminal is generally related to a time (for example, a time-domain position of the Msg1 is determined based on the action trigger time of the first target data), during selection of the uplink resource corresponding to the Msg1 (that is, the target uplink resource) in this embodiment, an uplink resource whose time domain information is closest to the action trigger time of the first target data may be selected from at least one uplink resource as the target uplink resource; or a target time window closest to the action trigger time of the first target data may be first determined and at least one uplink resource with time domain information being within the target time window is selected from the at least one uplink resource as the target uplink resource. The target uplink resource corresponds to the MsgA or the Msgl, that is, the first terminal uses the target uplink resource to send the first target data on the common DRB based on the target mode, so as to avoid a problem such as resource collision. When there are a plurality of uplink resources with time domain information being within the target time window, one or more uplink resources may be selected from the plurality of uplink resources as the target uplink resource in a random manner or in a priority order.

It should be noted that during selection of the target uplink resource, a condition such as whether the size of the selected target uplink resource matches the size of the common DRB can be further considered, which is not limited herein.

In this embodiment, before the first terminal performs data transmission on the common DRB based on the two-step random access mode or the four-step random access mode, selecting the target uplink resource can avoid a problem such as resource collision and improve efficiency of data transmission.

As shown in FIG. 4, FIG. 4 is a schematic flowchart of a data transmission method 400 according to an example embodiment of this application. The method may be, but is not limited to, performed by a first terminal, and specifically may be performed by hardware and/or software installed in the first terminal. In this embodiment, the method 400 may include at least the following steps.

S410: The first terminal obtains second configuration information.

The second configuration message may be sent by a network-side device to indicate a data transmission mode on the common DRB supported by the network-side device, so as to enable the first terminal to transmit data on the common DRB based on the data transmission mode on the common DRB supported by the network-side device, thereby ensuring consistency of information between the network-side device and the terminal side. Based on this, the second configuration information may include at least one of the following (21) and (22).

(21) The network-side device supports data transmission on a common DRB in a random access mode.

As described in the method embodiments 200 and 300, the random access mode may include a two-step random access mode and/or a four-step random access mode, and the data transmission on the common DRB includes a single data transmission on the common DRB and/or multiple data transmissions on the common DRB, that is, the network-side device supporting data transmission on the common DRB in the random access mode may include at least one of (211) to (214).

(211) The network-side device supports a single data transmission on the common DRB in the two-step random access mode.

(212) The network-side device supports multiple data transmissions on the common DRB in the two-step random access mode.

(213) The network-side device supports a single data transmission on the common DRB in the four-step random access mode.

(214) The network-side device supports multiple data transmissions on the common DRB in the four-step random access mode.

(22) The network-side device supports data transmission on the common DRB in a shared resource transmission mode.

The shared resource transmission mode may be understood as that a plurality of terminals (including the first terminal) can send data on a common channel (Common Channel, also known as a common pipeline or Uu common pipeline) based on the same resource through resource preemption. In other words, the shared resource corresponding to the shared resource transmission mode is used for transmission of non-control plane data by the plurality of terminals.

Optionally, the shared resources corresponding to the shared resource transmission mode may be configured for the first terminal by the network-side device through common signaling or RRC signaling, where RRC signaling is dedicated to transmitting the shared resources to the first terminal, and certainly, when the shared resources are configured through RRC signaling, a data plane function of the first terminal is authenticated or a data plane function of the first terminal is enabled.

It can be understood that the common channel can be understood as a connectionless or weakly connected data plane transmission manner adopted by the first terminal. The connectionless or weakly connected data plane transmission mode means that when needing to send data, the first terminal may implement data transmission with no need to enter an RRC connected state or RRC-inactive state (that is, in a case that there is no dedicated connection to the network-side device). In this way, it can reduce a lot of signaling overheads and time delay caused by a terminal-specific Uu interface connection and non-access stratum (Non-Access Stratum, NAS) connection in related technologies, and improve data transmission efficiency.

In addition, as described in the foregoing (21), the data transmission on the common DRB includes a single data transmission on the common DRB and/or multiple data transmissions on the common DRB; therefore, the data transmission on the common DRB in the shared resource transmission mode supported by the network-side device may include a single data transmission on the common DRB in the shared resource transmission mode supported by the network-side device and/or multiple data transmissions on the common DRB in the shared resource transmission mode supported by the network-side device.

Certainly, in this case, if the network-side device supports a plurality of common DRB transmission modes at the same time, the first terminal may select a corresponding common DRB transmission mode in the following manners 1 to 3 to implement transmission of the first target data. The content is as follows.

### Manner 1

It is assumed that the network-side device simultaneously configures (supports) the two-step random access mode and four-step random access mode for common DRB resources. Compared with the four-step random access mode, the two-step random access mode has advantages such as a shorter transmission delay. However, the two-step random access mode has higher requirements for transmission links. In this embodiment, in a case that the second configuration information includes the network-side device supporting data transmission on the common DRB in the random access mode and the random access mode includes the two-step random access mode and the four-step random access mode, the first terminal can perform any one of the following (31) to (34).

(31) Determining, based on link quality, whether to send the first target data on the common DRB based on the two-step random access mode or the four-step random access mode. For example, assuming that an RSRP of a serving cell is higher than a configured threshold, the first terminal chooses to send the first target data on the common DRB based on the two-step random access mode; otherwise, sends the first target data on the common DRB based on the four-step random access mode.

(32) Determining, based on a type of the common DRB, whether to send the first target data on the common DRB based on the two-step random access mode or the four-step random access mode. For example, it is specified that one specific type of service uses the two-step random access mode to transmit data, and another type of service uses the four-step random access mode to transmit data, or when a size of a resource block to be transmitted can only be carried based on the two-step random access mode or four-step random access mode, only a corresponding resource can be selected. In short, a RACH resource of a specified corresponding type can be selected according to the rule.

(33) Determining, based on a quality of service (Quality of Service, QoS) parameter for the common DRB, whether to send the first target data on the common DRB based on the two-step random access mode or the four-step random access mode.

For example, assuming that a QoS delay requirement is higher than a configured threshold, the first terminal chooses to send the first target data on the common DRB based on the two-step random access mode; otherwise, sends the first target data on the common DRB based on the four-step random access mode.

(34) In a case that the first target data is sent M times based on a first random access mode and none of the transmissions is successful, sending the first target data on the common DRB based on a random access mode other than the first random access mode, where the first random access mode is the two-step random access mode or the four-step random access mode, and M is greater than or equal to 1.

For example, when the first terminal selects the two-step random access mode for data transmission on the common DRB, if a specific number of times (such as M = 10 times) of attempts have been made or attempts have been made until a corresponding timer expires, the first terminal may fall back to the four-step random access mode for subsequent attempts until it fails for failure handling.

### Manner 2

Considering that the shared resource generally has advantages such as better transmission effects and greater bandwidth than the RACH resource, the shared resource transmission mode can be selected first. Based on this, in this embodiment, the first terminal performs at least one of the following (41) and (42) in a case that the second configuration information includes the data transmission on the common DRB in the random access mode supported by the network-side device and the data transmission on the common DRB in the shared resource transmission mode supported by the network-side device.

(41) In a case that the first terminal is in a valid area corresponding to the shared resource transmission mode and the network-side device indicates the first terminal not to maintain an uplink synchronization variable, the first terminal sends the first target data on the common DRB to the network-side device based on the shared resource transmission mode; and the uplink synchronization variable includes at least a TA.

In addition, when the first terminal has a valid TA, or a cell coverage is too small, the first terminal may alternatively send the first target data on the common DRB to the network-side device based on the shared resource transmission mode.

(42) In a case that the first terminal is not in the valid area corresponding to the shared resource transmission mode, the first terminal performs data transmission first on the common DRB based on the random access mode and obtains an uplink synchronization variable, and then sends the first target data or the second target data on the common DRB based on the uplink synchronization variable and the shared resource transmission mode, where the action trigger time of the second target data is later than that of the first target data.

For example, when the first terminal does not have a valid TA corresponding to the shared resource transmission mode, data transmission on the common DRB may be first performed based on the random access mode (such as the two-step random access mode or the four-step random access mode), and after obtaining of the TA, whether to use the shared resource transmission mode for subsequent data transmission on the common data RB can be chosen according to a transmission requirement.

### Manner 3

In a case that the data transmission of the common DRB includes a single data transmission on the common DRB and multiple data transmissions on the common DRB, the first terminal performs any one of the following (51) to (53).

(51) In a case that a data amount of the first target data is less than a first threshold (that is, a size of one resource is able to completely carry the first target data), the first terminal transmits the first target data based on the single data transmission on the common DRB.

(52) In a case that a data amount of the first target data is greater than a second threshold (a size of one resource is unable to completely carry the first target data), the first terminal transmits the first target data based on the multiple data transmissions on the common DRB.

(53) The first terminal determines, based on uplink resources respectively associated with the single data transmission on the common DRB and the multiple data transmissions on the common DRB, whether to transmit the first target data based on the single data transmission on the common DRB or the multiple data transmissions on the common DRB.

It can be understood that for resource configuration for the data transmission on the common DRB in this embodiment, resource configuration independent of the existing functions can be adopted. For example, the resource configuration for the data transmission on the common DRB based on the target mode in this embodiment is independent of the existing resource configuration for the two-step random access mode, four-step random access mode, and shared resource transmission mode, so that the terminal and network-side device can clearly know the purpose of the current data transmission process according to the resource configuration. For another example, resources for the single data transmission on the common DRB and the multiple data transmissions on the common DRB may be independent of each other. For example, if independent resources are allocated for the resources for the single data transmission on the common DRB and the multiple data transmissions on the common DRB, when the first terminal selects a corresponding resource, the network-side device already knows whether a data volume of the first terminal can be transmitted at one time, and then the first terminal and the network-side device end the data transmission on the common DRB after having performed the current transmission.

Alternatively, the resource configuration for the data transmission on the common DRB in this embodiment may use a resource configuration of other functions or processes to improve the resource utilization rate. However, it is necessary to clearly distinguish the data and purpose on the common DRB through some explicit fields or in an explicit manner such as an RB ID or other identifiers, so that the network-side device distinguishes different types of data for processing. For example, resources for the single data transmission on the common DRB and multiple data transmissions on the common DRB are multiplexed, thereby improving resource efficiency. In this way, the first terminal may carry, in the 1st transmission, an explicit or implicit indication on whether there is subsequent data or whether the transmission is a single data transmission. For example, the first terminal may add a buffer status report (Buffer Status Report, BSR) for directly indicating the amount of to-be-transmitted data, or the first terminal uses a special bit field for indicating whether it is a single data transmission/whether there is subsequent data or the like. If it is a single data transmission, the network-side device does not need to allocate a temporary RNTI and subsequent resources to the first terminal for subsequent transmission, and both ends end the process respectively after the single data transmission is successful. If it is multiple data transmissions, the network-side device needs to allocate a temporary RNTI and subsequent terminal-dedicated resources to the terminal for subsequent data packet transmission, and the process cannot be ended until the data transmission is completed.

To sum up, the network-side device can properly configure transmission resources on the common DRB according to its own algorithm, and provide necessary indication information for the terminal behavior, so that the terminal and the network-side device can perform transmission and indication according to the standardized behavior, so as to distinguish different cases and successfully complete data transmission and reception on the common DRB.

S420: The first terminal sends the first target data on the common data radio bearer DRB based on the target mode.

The first target data is non-control plane data, the target mode includes any one of a two-step random access mode and a four-step random access mode, the common DRB is used for transmitting the non-control plane data by a plurality of terminals, and the plurality of terminals include the first terminal.

It can be understood that for the implementation process of S420, reference may be made to the related description in the method embodiments 200 and 300; in addition, as a possible implementation, for a single data transmission on the common DRB or multiple data transmissions on the common DRB in this embodiment, if the first target data is based on the single data transmission on the common DRB and the single data transmission is one transport block, then: in a case that the first target data includes a single data packet, a transport block used for carrying the first target data may further include a first indication field and/or a second indication field, where the first indication field may be similar to the LI (Length Indicator) field used for indicating a length of the first target data (or a data packet), and the second indication field may be a padding indication field used for indicating padding information (for example, a bit) in the transport block, so as to meet the total size of the transport block (or resource block).

Alternatively, in a case that the first target data includes a plurality of data packets, the plurality of data packets are distinguished by length indicator information LI. In other words, the transport block may contain two or even more complete data packets; however, because one transport block does not support segmentation, different data packets can be distinguished by LI.

In another implementation, if the first target data is based on multiple data transmissions on the common DRB, the first terminal performs the 1st transmission for the first target data to the network-side device based on the target mode. In a case that the 1st transmission is successful and the first terminal receives a target temporary RNTI fed back by the network-side device, the first terminal performs subsequent transmissions other than the 1st transmission in the multiple transmissions based on the target temporary RNTI, where the target temporary RNTI is the first temporary RNTI or the second temporary RNTI.

It can be understood that the 1st transmission being successful can be understood as: the 1st transmission has been completed by the first terminal and contention resolution is successfully, and a weak connection to the network-side device has been established to obtain the target temporary RNTI. In this way, starting from the 2nd transmission, the network-side device may perform dedicated scheduling of subsequent data based on the target temporary RNTI.

In this case, for multiple data transmissions on the common DRB, the first terminal may alternatively send a buffer status report (Buffer Status Report, BSR) to the network-side device, where the BSR is used to inform the network-side device of an amount of to-be-transmitted data on the first terminal, so that the network-side device can perform dedicated uplink scheduling for the first terminal based on the BSR from the 2nd transmission until all the to-be-transmitted data on the first terminal is successfully transmitted.

A transmission occasion of the BSR may include at least one of the following (61) to (65).

(61) The 1st transmission in the multiple data transmissions on the common DRB. For example, when performing the 1st transmission based on the common DRB, the first terminal may explicitly or implicitly report the BSR.

(62) Compared with a previous BSR report, the amount of to-be-transmitted data on the first terminal has changed. For example, compared with the 1st BSR report or the last BSR report, new data to be reported is present on the first terminal. In this case, the first terminal may trigger BSR reporting again, and inform the network-side device of its own cache change in a timely manner, so that the network-side device performs subsequent scheduling of new data.

(63) An uplink resource scheduled by the network-side device is not large enough to carry scheduling data, but is large enough to carry one BSR. For example, when a size of a resource scheduled by the network-side device (such as the base station) is not large enough to carry the first target data and a gap is just large enough to carry one padding BSR, the padding BSR including current real-time cache information may alternatively be reported to the network-side device.

(64) All data buffered in the first terminal have been sent and there are still uplink resources left, where a buffer size (Buffer size) in the BSR is 0, or the BSR includes at least first indication information, and the first indication information is used to indicate that all the data buffered in the first terminal have been sent.

(65) Data for sending is not present on an uplink resource scheduled by the network-side device based on the target temporary RNTI, where the buffer size in the BSR is 0, or the BSR includes at least second indication information, and the second indication information is used to indicate that all the data buffered in the first terminal has been sent. For example, when all the to-be-transmitted data cached in the first terminal has been sent and there are still uplink resources left, or when data for sending is not present on an uplink resource scheduled by the network-side device, the first terminal may send a BSR with a buffer size = 0 to the network-side device, so as to inform the network-side device that all the data has been reported completely this time, that the temporary ID or temporary RNTI can be released, and that scheduling of uplink resource grant can be stopped.

Certainly, in addition to implicitly indicating end of data transmission by using a BSR with a buffer size = 0, the first terminal may perform explicit indication, for example, explicitly ends the data transmission by using a value of one special packet header, such as an end marker (end marker) field, or carries the packet number field by using an UP header or a control protocol data unit (control Protocol Data Unit, control PDU) to explicitly indicate how many data packets need to be sent this time. Once the total number is reached, it is marked as end, or one special control PDU is used to indicate that the data packet has been sent completely this time.

After the first terminal informs the network-side device in various manners that the data has been sent, the first terminal also releases the temporary RNTI or temporary ID, and stops monitoring for subsequent scheduling. In a case that the target data needs to be sent based on the common DRB again next time, a new process of multiple data transmissions starts from the 1st transmission again.

It should be noted that during multiple data transmissions on the common DRB, the network-side device does not know the identity of the terminal that sends the first target data. Therefore, in a case that the target data is sent to the network-side device through multiple transmissions, association identification may be performed on a plurality of data packets involved in the multiple transmissions by at least one of the following (71) to (75), so that the network-side device can identify that data received for multiple times belongs to a same terminal, with no need to identify the terminal identity.

(71) Local identifier (Local UE ID) of the first terminal, used to identify that a plurality of received data packets are associated and can be uniformly processed. It is equivalent that a data packet of UE1 is identified by using local UE ID 1 and a data packet of UE2 is identified by using local UE ID 2; those with a same identifier are processed uniformly, and those with different identifiers are processed separately.

(72) Identifier randomly allocated by the network-side device, used to identify that a plurality of received data packets are associated and can be uniformly processed. It is equivalent that a data packet of UE1 is identified by using UE ID 1 and a data packet of UE2 is identified by using UE ID 2; those with a same identifier are processed uniformly, and those with different identifiers are processed separately.

It should be noted that the following (73) or (75) can be combined on the basis of (71) or (72) to achieve integrity of the plurality of pieces of continuously reported data.

(73) Sequence number (Sequence Number, SN). That is, an SN identifier is introduced into data of a terminal, for example, SN = 0 indicates the 1st packet, or the 1st SN starts with a random number (Random Number), for example, SN = Random Number.

For the SN, one start marker (Start marker) and/or one end marker (End marker) may alternatively be set, where the start marker is used to indicate that this is the beginning of one data stream, and subsequent data packets need to be arranged in ascending order by incrementing by 1 in turn. The end marker is used to indicate that this is the end of one data stream, and there are no more subsequent data packets with this local UE ID. If they have been received sequentially, the local UE ID and receive buffer can be released.

For example, for the process of multiple data transmissions on the common DRB, due to sequential submission operations are required optionally, data packets for the multiple transmissions can be numbered, for example, carrying the SN field, where an initial value of the SN field is generally 0 and is incremented in turn. The access network device may sort the data in ascending order of SNs and sequentially send them to the core network device, so as to facilitate sequential processing on the core network device. If there is no need to submit the reported data in sequence, no SN number may be carried to save header overheads. Whether to carry the SN field and a length of the SN field can be sent to the first terminal by the network-side device as part of configuration information of the common DRB through dedicated signaling or common signaling.

In addition, due to N transmissions dedicated to one terminal, the network-side device may merge the N transmissions, and therefore data packet segmentation can be supported to better improve resource utilization. For data packet segmentation, the SN field needs to be carried, where the SN field may be composed of a segment indication field, a SO (Segment Offset) field, an LI (Length Indicator) field, and an end marker field.

For example, a size of the second uplink resource allocated to the terminal by the network-side device is 500 bytes, a size of a packet with SN = 2 of the UE is 300 bytes, and a size of a packet with SN = 3 is 400 bytes. In this case, on the second uplink resource, the terminal carries an entire packet with SN = 2 (SN = 2, without segmentation, LI = 300) and the first 200 bytes of the packet with SN = 3 (SN = 3, segmented packet, SO = 0 <indicating that this segment starts from the 0th byte of the original data packet>, LI = 200, and end marker = False). In a case that the network side allocates the third UL resource with a size of 200 bytes to the UE, the UE carries remaining segments with SN = 3 (SN = 3, segmented packet, SO = 200 <indicating that this segment starts from the 200th byte of the original data packet>, LI = 200, and end marker = True). The segmented manner can make full use of resources better to achieve higher transmission efficiency.

(74) Packet number (packet number) field. The packet number field is located in at least one first data packet, and the first data packet belongs to the plurality of data packets. Optionally, in all packets carrying this local UE ID, generally, only the first few packets need to carry the packet number, and following packets don't need to carry the packet number, because it is considered by default that the receive party has already known the packet number. After packets of a quantity being the packet number are received, it is considered that all the packets have been received, and the local UE ID and receive buffer can be released.

(75) First timer, where the first timer is started in a case that the network-side device receives the 1st second data packet, the second data packet is transmitted on a first resource or the second data packet carries a local identifier of the first terminal, and expiration of the first timer indicates that data packet reception associated with the second data packet ends.

For example, the network-side device starts or restarts the first timer after receiving data packets with each local UE ID. After the first timer expires, it is considered that there are no more data packets with the local UE ID, that is, the data packets with the local UE ID have been completely received, and the local UE ID and the receive buffer can be released.

Furthermore, in addition to the association identification performed on a plurality of data packets in the multiple data transmissions, a data packet transmitted in the single data transmission can also be identified, that is, one specific piece of data sent by the first terminal is identified as an isolated packet, for example, the data packet does not carry a local UE ID, indicating that there is only an isolated packet, without subsequent data; or there is no SN field, or the packet carries the SN, being the first packet and also the tail packet, which all indicates an isolated packet. Certainly, if the isolated packet and a plurality of consecutive packets have been mapped differently based on levels of different sessions (session), different flow (flow) IDs, or different tunnel IDs, such differentiation manners are not required. Only when the isolated packet may be transmitted along with a plurality of packets, the foregoing manners are further required for differentiation.

Further, if the first terminal completes multiple data transmissions on the common DRB or all data cached in the first terminal has been sent, the target temporary RNTI is released; or, the first terminal releases the target temporary RNTI when a third timer expires, and the third timer is started when the first terminal triggers the last data transmission in the multiple data transmissions on the common DRB.

Correspondingly, the network-side device releases the target temporary RNTI in a case that a fourth timer expires, where the fourth timer is started when the network-side device receives data corresponding to the target temporary RNTI for the last time.

Further, if the first terminal sends the first target data on the common DRB for many times and the transmission fails, or if the second timer expires and the transmission fails, the first terminal may immediately enter a connected state and send first information to the network-side device, where the first information includes at least data reporting failure information and/or a data reporting failure cause; or the first terminal records a data reporting failure cause, and sends second information to the network-side device after entering the connected state, where the second information includes at least data reporting failure information and/or the data reporting failure cause; where the second timer is started by the terminal when the terminal starts to send the first target data on the common DRB.

Optionally, the data reporting failure cause may be, but is not limited to, terminal location information, link quality information, the number of failed attempts, and the like.

This embodiment provides a data transmission method for the data plane, which ensures that data sent by the terminal can still reach the network-side device through the Uu interface in a case that no dedicated Uu interface connection is established. This ensures that the terminal can efficiently use the data plane for reporting, which reduces reporting signaling overheads on the basis of taking into account the reporting effect and improves the system efficiency.

As shown in FIG. 5, FIG. 5 is a schematic flowchart of a data transmission method 500 according to an example embodiment of this application. The method may be, but is not limited to, performed by a first terminal, and specifically may be performed by hardware and/or software installed in the first terminal. In this embodiment, the method may include at least the following steps.

S510: The first terminal sends first target data on a common DRB based on a target mode.

The first target data is non-control plane data, the target mode includes any one of a two-step random access mode and a four-step random access mode, the common DRB is used for transmitting the non-control plane data by a plurality of terminals, and the plurality of terminals include the first terminal.

It can be understood that for the implementation processes of the method embodiment 500, reference may be made to the related description in the method embodiments 200 to 400; in addition, as a possible implementation, if the first terminal performs a single data transmission on the common DRB or multiple data transmissions on the common DRB, generally cell reselection or handover may be performed after a source cell successfully completes data transmission. However, if it is not expected to affect the process of cell reselection or handover, even if the single data transmission on the common DRB or multiple data transmissions on the common DRB are not completed, for example, the first target data is sent based on the common DRB and feedback information (such as first contention resolution related information carried in MsgB or second contention resolution related information carried in Msg4) has not been yet received, that is, the first terminal has performed cell handover during data transmission, such as handing over from a currently camped-on source cell to a target cell, the first terminal may perform any one of the following (81) to (83).

(81) For the first target data, in a case that the first terminal performs a single data transmission on a common DRB in a source cell and the transmission has not been completed, the first terminal performs a single data transmission on a common DRB again after having reselected onto or handed over to a target cell.

(82) For the first target data, in a case that the first terminal performs multiple data transmissions on the common DRB in the source cell and has reselected onto or handed over to a target cell during the transmission period, the first terminal performs multiple data transmissions on a common DRB in the target cell.

It can be understood that the first terminal accessing the target cell may choose to resend, in the target cell, all the first target data that needs to be sent in the current time, that is, even if part of the first target data has been successfully sent in the source cell, the first terminal needs to report all the first target data again because data cannot be merged and received across cells and all the data reported this time cannot be identified.

(83) For the first target data, in a case that the first terminal performs multiple data transmissions on the common DRB in the source cell and has reselected onto or handed over to the target cell during the transmission period, the first terminal continues, based on the multiple data transmissions on the common DRB, to send in the target cell other data that has not been sent completely in the target data, where each piece of data included in the multiple data transmissions on the common DRB has self-parsing characteristics.

It can be understood that the first terminal accessing the target cell can alternatively choose to send, in the target cell, remaining first target data that has not been sent in the source cell. The premise of this implementation is that data in different parts of the first target data has self-parsing characteristics, which means that the former part of the first target data is sent to the core network device through the source cell, and the latter part of the data is sent to the core network device through the target cell. The core network device does not need to merge or identify the data, and merely needs to extract valid information by processing respective parts of the data.

Certainly, for the aforementioned (71) to (73), in a case that the first terminal has reselected onto or handed over to the target cell and a related configuration (such as the first shared resource information) for data transmission on the common DRB in the target cell is different from a related configuration for data transmission on the common DRB in the source cell, the first terminal obtains the related configuration for data transmission on the common DRB in the target cell; and based on the related configuration for data transmission on the common DRB in the target cell, the first terminal performs a single data transmission on the common DRB again, or performs multiple data transmissions on the common DRB in the target cell, or performs the step of continuing, based on the multiple data transmissions on the common DRB in the target cell, to send other data that has not been sent completely in the target data.

That is, after entering the target cell, the first terminal needs to read the related configuration for data transmission on the common DRB in the target cell again and perform transmission again according to the related configuration requirement of data transmission on the common DRB in the target cell. However, if the source cell and the target cell belong to a same configuration area, that is, the related configuration for data transmission on the common DRB in the target cell is the same as the related configuration for data transmission on the common DRB in the source cell, the first terminal does not need to read the related configuration for data transmission on the common DRB again in the target cell, and directly retransmits part or all of the first target data.

In addition, for the first terminal leaving the source cell, there may be the following rules for how to normally end the process in the source cell.

Because the first terminal is very clear that it has changed the cell, the first terminal may end the unfinished data transmission process in the source cell, and remove all processes and timers, and restart data transmission attempts in the target cell.

The network-side device to which the source cell belongs may not be clear that the first terminal has left the source cell because a cell reselection or handover notice of the first terminal cannot be obtained in a timely manner, and its process continues. However, the network-side device may alternatively detect through some implementations that the first terminal is abnormal. For example, data of the first terminal can no longer be received for a period of time on an uplink resource scheduled for multiple transmissions; in this case, the network-side device may consider that the first terminal has left the source cell, and then drops subsequent scheduling and ends the process.

Further, for the terminal state, the terminal state (that is, the first state) in the related art such as an idle (Idle) state, an inactive (Inactive) state, and a connected (Connected) state may be performed independently from the target data transmission state based on the common DRB described in this embodiment. However, if a behavior of the terminal in an existing state (such as idle, inactive, or connected) conflicts with the target data transmission behavior based on the common DRB, the first terminal can perform handling according to the following manners 1 to 4.

Manner 1: being autonomously determined by the first terminal, where the first state includes a connected state, an idle state, or an inactive state. For example, the first terminal may autonomously determine whether to perform a behavior in the first state or to perform transmission of the first target data based on the common DRB.

Manner 2: being determined by the first terminal based on a priority order between the first state and transmission of the first target data on the common DRB. For example, if a priority of the behavior in the first state is higher than a priority of the transmission of the first target data based on the common DRB, the first terminal performs the behavior in the first state; or vice versa.

Manner 3: in a case that the first state is a connected state, the first terminal processes the first state and processes transmission of the first target data on the common DRB by multiplexing a unicast (Unicast) channel mode in the first state.

Manner 4: in a case that the first state is an inactive state or an idle state, the first terminal processes the target data transmission on the common DRB at other occasions than a first occasion, so as to avoid the related behavior on the first occasion. The first occasion includes at least one of paging occasion, system information (System Information, SI) monitoring occasion, measurement occasion, and change notification (change notification) monitoring occasion.

In this embodiment, reliability of data transmission when the terminal performs cell reselection or handover is ensured, and the system efficiency is improved.

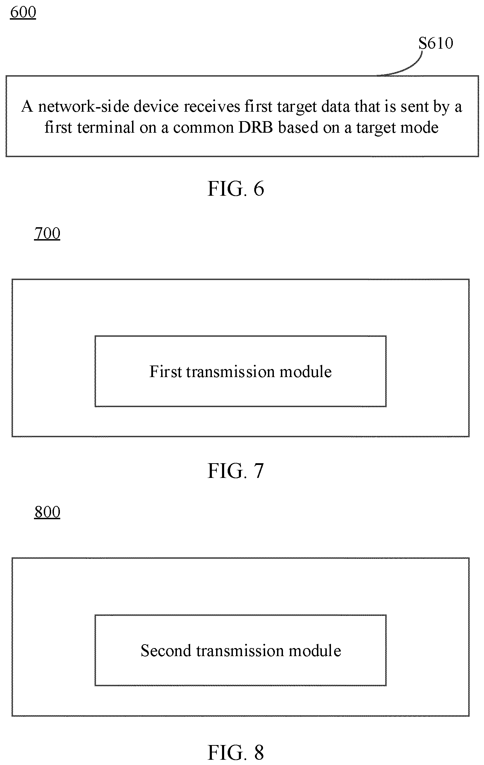

As shown in FIG. 6, FIG. 6 is a schematic flowchart of a data transmission method 600 according to an example embodiment of this application. The method may be, but is not limited to, performed by a network-side device, and specifically may be performed by hardware and/or software installed in the network-side device. In this embodiment, the method 600 may include at least the following steps.

S610: The network-side device receives first target data that is sent by a first terminal on a common data radio bearer DRB based on a target mode.

The first target data is non-control plane data, the target mode includes any one of a two-step random access mode and a four-step random access mode, the common DRB is used for transmitting the non-control plane data by a plurality of terminals, and the plurality of terminals include the first terminal.

Optionally, a time-domain position of a message MsgA in the two-step random access mode is determined based on an action trigger time of the first target data, an MsgB corresponding to the two-step random access mode carries at least first contention resolution related information, and the first contention resolution related information is determined by a network-side device based on at least part of the received first target data; and a time-domain position of an Msg1 in the four-step random access mode is determined based on the action trigger time of the first target data.

Optionally, the MsgB in the two-step random access mode further carries at least one of the following: a timing advance TA, where the TA is used for establishing and maintaining uplink synchronization; uplink resource allocation information, where the uplink resource allocation information is used for sending second target data on the common DRB; a first temporary radio network temporary identifier RNTI, where the first temporary RNTI is used for scheduling at least one piece of second target data on the first terminal; and first configuration information, where the first configuration information includes at least one of transmission power control TPC and a hybrid automatic repeat request HARQ feedback related indication; where an action trigger time of the second target data is after the action trigger time of the first target data.

Optionally, an Msg2 in the four-step random access mode carries at least a second temporary RNTI, and the second temporary RNTI is used for scheduling at least one piece of second target data on the first terminal; and/or an Msg4 in the four-step random access mode carries at least second contention resolution related information, and the second contention resolution related information is determined by the network-side device based on at least part of the received first target data.

Optionally, the first target data transmitted based on the common DRB does not carry or correspond to identification information, and the identification information is used to identify the first terminal.

Optionally, in a case that the first target data includes a single data packet, a transport block for carrying the first target data further includes a first indication field and/or a second indication field, where the first indication field is used for indicating a length of the first target data and the second indication field is used for indicating padding information in the transport block; or in a case that the first target data includes a plurality of data packets, the plurality of data packets are distinguished by length indicator information LI.

Optionally, the step of receiving, by a network-side device, first target data on a common data radio bearer DRB includes: receiving, by the network-side device, the 1st transmission that is performed for the first target data by the first terminal to the network-side device based on the target mode; and
sending, by the network-side device, a target temporary RNTI, and scheduling, based on the target temporary RNTI, subsequent transmissions other than the 1st transmission in multiple transmissions on the common DRB, where the target temporary RNTI is the first temporary RNTI or the second temporary RNTI.

Optionally, a plurality of data packets included in the multiple data transmissions on the common DRB are associated and identified by at least one of the following: a local identifier of a terminal; an identifier randomly allocated by the network-side device; a sequence number SN; a packet number (packet number) field, where the packet number field is located in at least one first data packet, the first data packet belongs to the plurality of data packets, and a sending time of the first data packet is earlier than a sending time of another data packet other than the first data packet in the plurality of data packets; and a first timer, where the first timer is started in a case that the network-side device receives the 1st second data packet, the second data packet is transmitted on a first resource or the second data packet carries a local identifier of the first terminal, and expiration of the first timer indicates that data packet transmission associated with the second data packet ends.

Optionally, the SN includes at least a start marker and/or an end marker.

Optionally, the method further includes: receiving, by the network-side device, a buffer status report BSR, where the BSR is used to inform the network-side device of an amount of to-be-transmitted data on the first terminal; and scheduling, by the network-side device based on the BSR, the subsequent transmissions other than the 1st transmission in the multiple transmissions on the common DRB; where a transmission occasion of the BSR includes at least one of the following: the 1st transmission in the multiple data transmissions on the common DRB; compared with a previous BSR report, the amount of to-be-transmitted data on the first terminal has changed; an uplink resource scheduled by the network-side device is not large enough to carry scheduling data, but is large enough to carry one BSR; all data buffered in the first terminal have been sent and there are still uplink resources left, where a buffer size (Buffer size) in the BSR is 0, or the BSR includes at least first indication information, and the first indication information is used to indicate that all the data buffered in the first terminal have been sent; and data for sending is not present on an uplink resource scheduled by the network-side device based on the target temporary RNTI, where the buffer size in the BSR is 0, or the BSR includes at least second indication information, and the second indication information is used to indicate that all the data buffered in the first terminal has been sent.

Optionally, before the step of receiving, by a network-side device, first target data on a common data radio bearer DRB, the method further includes: sending, by the network-side device, second configuration information; where the second configuration information includes at least one of the following: the network-side device supports data transmission on a common DRB in a random access mode; and the network-side device supports data transmission on a common DRB in a shared resource transmission mode; where the random access mode includes the two-step random access mode and/or the four-step random access mode, and the data transmission on the common DRB includes a single data transmission on the common DRB and/or multiple data transmissions on the common DRB.

Optionally, the method further includes: receiving, by the network-side device, first information or second information, where the first information or the second information includes at least data reporting failure information and/or a data reporting failure cause.

Optionally, the method further includes any one of the following: releasing, by the network-side device, the target temporary RNTI in a case that a fourth timer expires, where the fourth timer is started when the network-side device receives data corresponding to the temporary RNTI for the last time.

Optionally, the method further includes: in a case that the network-side device is an access network device, sending, by the access network device, the first target data to a core network device based on a common pipeline; where the first target data transmitted based on the common pipeline does not carry or correspond to identification information, and the identification information is used to identify the first terminal.

It can be understood that the implementations described in the method embodiment 600 have the same or corresponding technical features as those in the method embodiments 200 to 500. For the implementation process of the method embodiment 600, refer to the related descriptions in the method embodiments 200 to 500, with same technical effects achieved. To avoid repetition, details are not described herein again.

In the data transmission method provided in the embodiments of this application, the execution subject may be a data transmission apparatus. In the embodiments of this application, the data transmission method being performed by the data transmission apparatus is used as an example to describe the data transmission apparatus provided in the embodiments of this application.

As shown in FIG. 7, FIG. 7 is a schematic structural diagram of a data transmission apparatus 700 according to an example embodiment of this application. The apparatus 700 includes a first transmission module 710, configured to send first target data on a common data radio bearer DRB based on a target mode, where the first target data is non-control plane data; and the target mode includes any one of a two-step random access mode and a four-step random access mode, the common DRB is used for transmitting the non-control plane data by a plurality of terminals, and the plurality of terminals include the first terminal.

Optionally, the apparatus 700 further includes a determining module configured to determine the first target data.

Optionally, a time-domain position of a message MsgA in the two-step random access mode is determined based on an action trigger time of the first target data, an MsgB corresponding to the two-step random access mode carries at least first contention resolution related information, and the first contention resolution related information is determined by a network-side device based on at least part of the received first target data; and a time-domain position of an Msg1 in the four-step random access mode is determined based on the action trigger time of the first target data.

Optionally, the apparatus 700 further includes a resource determining module, where the resource determining module is configured to select an uplink resource whose time domain information is closest to the action trigger time of the first target data from at least one uplink resource as a target uplink resource; or determine a target time window closest to the action trigger time of the first target data and select at least one uplink resource with time domain information being within the target time window from the at least one uplink resource as the target uplink resource. That the first transmission module 710 sends the first target data on the common data radio bearer DRB based on the target mode includes: sending the first target data on the common DRB based on the target mode by using the target uplink resource; where the target uplink resource corresponds to the MsgA or the Msg1.

Optionally, in a case that there are a plurality of uplink resources with different resource sizes, the uplink resources correspond to resource usage conditions. That the first transmission module 710 sends the first target data on the common DRB by using the target uplink resource based on the target mode includes: sending the first target data on the common DRB based on the target mode by using the target uplink resource meeting the resource usage condition.

Optionally, the resource usage condition is determined at least based on a reference signal received power RSRP.

Optionally, the MsgB in the two-step random access mode further carries at least one of the following: a timing advance TA, where the TA is used for establishing and maintaining uplink synchronization; uplink resource allocation information, where the uplink resource allocation information is used for sending second target data on the common DRB; a first temporary radio network temporary identifier RNTI, where the first temporary RNTI is used for scheduling at least one piece of second target data on the first terminal; and first configuration information, where the first configuration information includes at least one of transmission power control TPC and a hybrid automatic repeat request HARQ feedback related indication; where an action trigger time of the second target data is after the action trigger time of the first target data.

Optionally, an Msg2 in the four-step random access mode carries at least a second temporary RNTI, and the second temporary RNTI is used for scheduling at least one piece of second target data on the first terminal; and/or an Msg4 in the four-step random access mode carries at least second contention resolution related information, and the second contention resolution related information is determined by the network-side device based on at least part of the received first target data.

Optionally, the first target data transmitted based on the common DRB does not carry or correspond to identification information, and the identification information is used to identify the first terminal.

Optionally, in a case that the first target data includes a single data packet, a transport block for carrying the first target data further includes a first indication field and/or a second indication field, where the first indication field is used for indicating a length of the first target data and the second indication field is used for indicating padding information in the transport block; or in a case that the first target data includes a plurality of data packets, the plurality of data packets are distinguished by length indicator information LI.

Optionally, the first transmission module 710 is configured to: for the first target data, in a case that the first terminal needs to perform multiple data transmissions on the common DRB, perform, for the first terminal, the 1st transmission to the network-side device based on the target mode; and in a case that the 1st transmission is successful and the first terminal receives a target temporary RNTI fed back by the network-side device, perform, for the first terminal based on the temporary RNTI, subsequent transmissions other than the 1st transmission in the multiple transmissions, where the target temporary RNTI is the first temporary RNTI or the second temporary RNTI.

Optionally, a plurality of data packets included in the multiple data transmissions on the common DRB are associated and identified by at least one of the following: a local identifier of a terminal; an identifier randomly allocated by the network-side device; a sequence number SN; a packet number (packet number) field, where the packet number field is located in at least one first data packet, the first data packet belongs to the plurality of data packets, and a sending time of the first data packet is earlier than a sending time of another data packet other than the first data packet in the plurality of data packets; and a first timer, where the first timer is started in a case that the network-side device receives the 1st second data packet, the second data packet is transmitted on a first resource or the second data packet carries a local identifier of the first terminal, and expiration of the first timer indicates that data packet transmission associated with the second data packet ends.

Optionally, the SN includes at least a start marker and/or an end marker.

Optionally, the first transmission module 710 is further configured to: send a buffer status report BSR to the network-side device, where the BSR is used to inform the network-side device of an amount of to-be-transmitted data on the first terminal, and a transmission occasion of the BSR includes at least one of the following: the 1st transmission in the multiple data transmissions on the common DRB; compared with a previous BSR report, the amount of to-be-transmitted data on the first terminal has changed; an uplink resource scheduled by the network-side device is not large enough to carry scheduling data, but is large enough to carry one BSR; all data buffered in the first terminal have been sent and there are still uplink resources left, where a buffer size (Buffer size) in the BSR is 0, or the BSR includes at least first indication information, and the first indication information is used to indicate that all the data buffered in the first terminal have been sent; and data for sending is not present on an uplink resource scheduled by the network-side device based on the target temporary RNTI, where the buffer size in the BSR is 0, or the BSR includes at least second indication information, and the second indication information is used to indicate that all the data buffered in the first terminal has been sent.

Optionally, the first transmission module 710 is further configured to: obtain second configuration information; where the second configuration information includes at least one of the following: the network-side device supports data transmission on a common DRB in a random access mode; and the network-side device supports data transmission on a common DRB in a shared resource transmission mode; where the random access mode includes the two-step random access mode and/or the four-step random access mode, and the data transmission on the common DRB includes a single data transmission on the common DRB and/or multiple data transmissions on the common DRB.

Optionally, in a case that the second configuration information includes the network-side device supporting data transmission on the common DRB in the random access mode and the random access mode includes the two-step random access mode and the four-step random access mode, the first transmission module 710 is configured to perform any one of the following: determining, based on link quality, whether to send the first target data on the common DRB based on the two-step random access mode or the four-step random access mode; determining, based on a type of the common DRB, whether to send the first target data on the common DRB based on the two-step random access mode or the four-step random access mode; determining, based on a quality of service QoS parameter for the common DRB, whether to send the first target data on the common DRB based on the two-step random access mode or the four-step random access mode; and in a case that the first target data is sent M times based on a first random access mode and none of the transmissions is successful, sending the first target data on the common DRB based on a random access mode other than the first random access mode, where the first random access mode is the two-step random access mode or the four-step random access mode, and M is greater than or equal to 1.

Optionally, in a case that the second configuration information includes the network-side device supporting data transmission on the common DRB in the random access mode and the network-side device supporting data transmission on the common DRB in the shared resource transmission mode, the first transmission module 710 is configured to perform at least one of the following: in a case that the first terminal is in a valid area corresponding to the shared resource transmission mode and the network-side device indicates the first terminal not to maintain an uplink synchronization variable, sending, by the first terminal, the first target data on the common DRB to the network-side device based on the shared resource transmission mode; and in a case that the first terminal is not in the valid area corresponding to the shared resource transmission mode, performing, by the first terminal, data transmission first on the common DRB based on the random access mode and obtaining an uplink synchronization variable, and then sending the first target data or the second target data on the common DRB based on the uplink synchronization variable and the shared resource transmission mode, where the action trigger time of the second target data is later than that of the first target data; where a shared resource corresponding to the shared resource transmission mode is used for transmission of non-control plane data by the plurality of terminals, and the uplink synchronization variable includes at least a TA.

Optionally, in a case that the data transmission of the common DRB includes a single data transmission on the common DRB and multiple data transmissions on the common DRB, the first transmission module 710 is configured to perform any one of the following: in a case that a data amount of the first target data is less than a first threshold, transmitting, by the first terminal, the first target data based on the single data transmission on the common DRB; in a case that the data amount of the first target data is greater than a second threshold, transmitting, by the first terminal, the first target data based on the multiple data transmissions on the common DRB; and determining, by the first terminal based on uplink resources respectively associated with the single data transmission on the common DRB and the multiple data transmissions on the common DRB, whether to transmit the first target data based on the single data transmission on the common DRB or the multiple data transmissions on the common DRB.

Optionally, that the first transmission module 710 is configured to perform the step of sending the first target data on the common DRB based on the target mode includes any one of the following: for the first target data, in a case that the first terminal performs a single data transmission on a common DRB in a source cell and the transmission has not been completed, performing, by the first terminal, a single data transmission on a common DRB again after having reselected onto or handed over to a target cell; for the first target data, in a case that the first terminal performs multiple data transmissions on the common DRB in the source cell and has reselected onto or handed over to a target cell during the transmission period, performing, by the first terminal, multiple data transmissions on a common DRB in the target cell; and for the first target data, in a case that the first terminal performs multiple data transmissions on the common DRB in the source cell and has reselected onto or handed over to the target cell during the transmission period, continuing, by the first terminal based on the multiple data transmissions on the common DRB, to send in the target cell other data that has not been sent completely in the first target data, where each piece of data included in the multiple data transmissions on the common DRB has self-parsing characteristics.

Optionally, in a case that the first terminal has reselected onto or handed over to the target cell and a related configuration for data transmission on the common DRB in the target cell is different from a related configuration for data transmission on the common DRB in the source cell, the first transmission module 710 is configured to obtain the related configuration for data transmission on the common DRB in the target cell; and based on the related configuration for data transmission on the common DRB in the target cell, perform a single data transmission on the common DRB again, or perform multiple data transmissions on the common DRB in the target cell, or perform the step of continuing, based on the multiple data transmissions on the common DRB in the target cell, to send other data that has not been sent completely in the first target data.

Optionally, the apparatus 700 further includes a determining module. In a case that a current first state of the first terminal collides with a data transmission on the common DRB that needs to be executed currently, the determining module is configured to determine, based on at least one of the following, whether to process the first state or the data transmission on the common DRB: being autonomously determined by the first terminal, where the first state includes a connected state, an idle state, or an inactive state; being determined by the first terminal based on a priority order between the first state and the data transmission on the common DRB; in a case that the first state is a connected state, the first terminal processes the first state and processes the data transmission on the common DRB by multiplexing a unicast (Unicast) common DRB mode in the first state; and in a case that the first state is an inactive state or an idle state, the first terminal processes the data transmission on the common DRB at other occasions than a first occasion, where the first occasion includes at least one of paging occasion, system information SI monitoring occasion, measurement occasion, and change notification (change notification) monitoring occasion.

Optionally, in a case that the first terminal sends the first target data on the common DRB for a plurality of times and the transmissions fail, or in a case that a second timer expires and the transmissions fail, the first terminal performs at least one of the following: the first terminal enters a connected state, and sends first information to the network-side device through the first transmission module 710, where the first information includes at least data reporting failure information and/or a data reporting failure cause; and the first terminal records a data reporting failure cause, and sends second information to the network-side device through the first transmission module 710 after entering the connected state, where the second information includes at least data reporting failure information and/or the data reporting failure cause; where the second timer is started by the terminal when the terminal starts to send the first target data on the common DRB.

Optionally, the apparatus further includes a releasing module, configured to perform any one of the following: releasing the target temporary RNTI in a case that the multiple data transmissions on the common DRB have been completed or all the data cached in the first terminal has been sent; and releasing the target temporary RNTI in a case that a third timer expires, where the third timer is started when the first terminal triggers the last data transmission in the multiple data transmissions on the common DRB.

The data transmission apparatus 700 in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The data transmission apparatus 700 provided in this embodiment of this application can implement the processes implemented in the method embodiments in FIG. 2 to FIG. 5, with the same technical effects achieved. To avoid repetition, details are not described herein again.

As shown in FIG. 8, FIG. 8 is a schematic structural diagram of a data transmission apparatus 800 according to an example embodiment of this application. The apparatus 800 includes a data transmission apparatus, including: a second transmission module 810, configured to receive first target data that is sent by a first terminal on a common data radio bearer DRB based on a target mode; where the first target data is non-control plane data, the target mode includes any one of a two-step random access mode and a four-step random access mode, the common DRB is used for transmitting the non-control plane data by a plurality of terminals, and the plurality of terminals include the first terminal.

Optionally, the apparatus 800 further includes a configuration module for configuring second configuration information.

Optionally, a time-domain position of a message MsgA in the two-step random access mode is determined based on an action trigger time of the first target data, an MsgB corresponding to the two-step random access mode carries at least first contention resolution related information, and the first contention resolution related information is determined by a network-side device based on at least part of the received first target data; and a time-domain position of an Msg1 in the four-step random access mode is determined based on the action trigger time of the first target data.

Optionally, the MsgB in the two-step random access mode further carries at least one of the following: a timing advance TA, where the TA is used for establishing and maintaining uplink synchronization; uplink resource allocation information, where the uplink resource allocation information is used for sending second target data on the common DRB; a first temporary radio network temporary identifier RNTI, where the first temporary RNTI is used for scheduling at least one piece of second target data on the first terminal; and first configuration information, where the first configuration information includes at least one of transmission power control TPC and a hybrid automatic repeat request HARQ feedback related indication; where an action trigger time of the second target data is after the action trigger time of the first target data.

Optionally, an Msg2 in the four-step random access mode carries at least a second temporary RNTI, and the second temporary RNTI is used for scheduling at least one piece of second target data on the first terminal; and/or an Msg4 in the four-step random access mode carries at least second contention resolution related information, and the second contention resolution related information is determined by the network-side device based on at least part of the received first target data.

Optionally, the first target data transmitted based on the common DRB does not carry or correspond to identification information, and the identification information is used to identify the first terminal.

Optionally, in a case that the first target data includes a single data packet, a transport block for carrying the first target data further includes a first indication field and/or a second indication field, where the first indication field is used for indicating a length of the first target data and the second indication field is used for indicating padding information in the transport block; or in a case that the first target data includes a plurality of data packets, the plurality of data packets are distinguished by length indicator information LI.

Optionally, the step of receiving the first target data on the common data radio bearer DRB by the network-side device includes: receiving, by the network-side device, the 1st transmission that is performed for the first target data by the first terminal to the network-side device based on the target mode; and sending, by the network-side device, a target temporary RNTI, and scheduling, based on the target temporary RNTI, subsequent transmissions other than the 1st transmission in multiple transmissions on the common DRB, where the target temporary RNTI is the first temporary RNTI or the second temporary RNTI.

Optionally, a plurality of data packets included in the multiple data transmissions on the common DRB are associated and identified by at least one of the following: a local identifier of a terminal; an identifier randomly allocated by the network-side device; a sequence number SN; a packet number (packet number) field, where the packet number field is located in at least one first data packet, the first data packet belongs to the plurality of data packets, and a sending time of the first data packet is earlier than a sending time of another data packet other than the first data packet in the plurality of data packets; and a first timer, where the first timer is started in a case that the network-side device receives the 1st second data packet, the second data packet is transmitted on a first resource or the second data packet carries a local identifier of the first terminal, and expiration of the first timer indicates that data packet transmission associated with the second data packet ends.

Optionally, the SN includes at least a start marker and/or an end marker.

Optionally, the network-side device receives a buffer status report BSR, where the BSR is used to inform the network-side device of an amount of to-be-transmitted data on the first terminal; and the network-side device schedules based on the BSR, the subsequent transmissions other than the 1st transmission in the multiple transmissions on the common DRB; where a transmission occasion of the BSR includes at least one of the following: the 1st transmission in the multiple data transmissions on the common DRB; compared with a previous BSR report, the amount of to-be-transmitted data on the first terminal has changed; an uplink resource scheduled by the network-side device is not large enough to carry scheduling data, but is large enough to carry one BSR; all data buffered in the first terminal have been sent and there are still uplink resources left, where a buffer size (Buffer size) in the BSR is 0, or the BSR includes at least first indication information, and the first indication information is used to indicate that all the data buffered in the first terminal have been sent; and data for sending is not present on an uplink resource scheduled by the network-side device based on the target temporary RNTI, where the buffer size in the BSR is 0, or the BSR includes at least second indication information, and the second indication information is used to indicate that all the data buffered in the first terminal has been sent.

Optionally, before the network-side device receives the first target data on the common data radio bearer DRB, the network-side device sends second configuration information; where the second configuration information includes at least one of the following: the network-side device supports data transmission on a common DRB in a random access mode; and the network-side device supports data transmission on a common DRB in a shared resource transmission mode; where the random access mode includes the two-step random access mode and/or the four-step random access mode, and the data transmission on the common DRB includes a single data transmission on the common DRB and/or multiple data transmissions on the common DRB.

Optionally, the network-side device receives first information or second information, where the first information or the second information includes at least data reporting failure information and/or a data reporting failure cause.

Optionally, the network-side device releases the target temporary RNTI in a case that a fourth timer expires, where the fourth timer is started when the network-side device receives data corresponding to the temporary RNTI for the last time.

Optionally, in a case that the network-side device is an access network device, the access network device sends the first target data to a core network device based on a common pipeline; where the first target data transmitted based on the common pipeline does not carry or correspond to identification information, and the identification information is used to identify the first terminal.

The data transmission apparatus 700 in this embodiment of this application may be a network-side device. For example, the network-side device may include, but is not limited to, the types of the network-side device 12 listed above, which is not specifically limited in this embodiment of this application.

The data transmission apparatus 700 provided in this embodiment of this application can implement the processes implemented in the method embodiment in FIG. 6, with the same technical effects achieved. To avoid repetition, details are not described herein again.

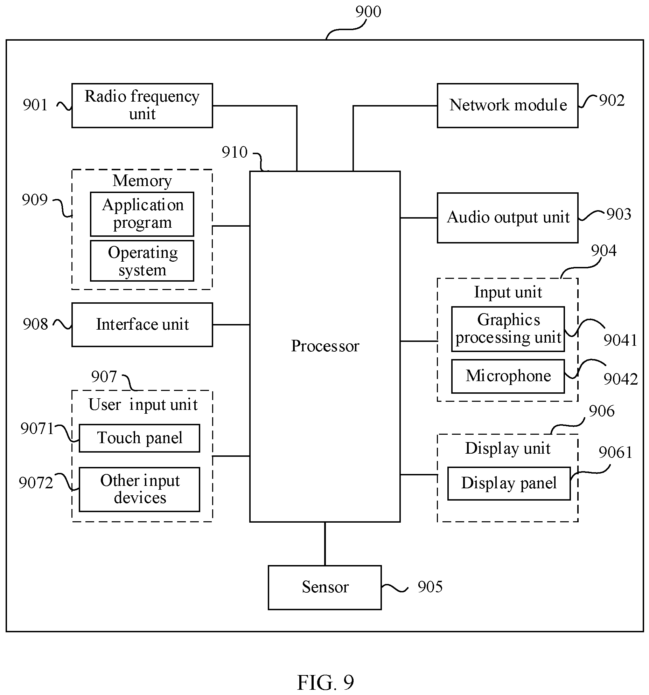

An embodiment of this application further provides a terminal, including a processor and a communication interface, where the communication interface is coupled to the processor, and the processor is configured to run a program or instructions to implement the steps of the method embodiments 200 to 500. The terminal embodiments correspond to the foregoing terminal-side method embodiments, and the implementation processes and implementations of the foregoing method embodiments can be applied to the terminal embodiments, with the same technical effects achieved. Specifically, FIG. 9 is a schematic diagram of a hardware structure of a terminal for implementing the embodiments of this application.

The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 may include at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

In this embodiment of this application, the radio frequency unit 901 receives downlink data from a network-side device, and then sends the downlink data to the processor 910 for processing. In addition, the radio frequency unit 901 may send uplink data to the network-side device. Generally, the radio frequency unit 901 includes but is not limited to an antenna, an amplifier, a transceiver, a coupler, a low noise amplifier, a duplexer, and the like.

The memory 909 may be configured to store software programs or instructions and various data. The memory 909 may include a first storage area for storing a program or instructions and a second storage area for storing data. The first storage area may store an operating system, an application program or instruction required by at least one function (for example, a sound playback function or an image playback function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 909 in the embodiments of this application includes but is not limited to these and any other suitable types of memories.

The processor 910 may include one or more processing units. Optionally, an application processor and a modem processor may be integrated in the processor 910. This application processor primarily processes operations involving an operating system, user interfaces, application programs, and the like. The modem processor primarily processes radio communication signals, for example, being a baseband processor. It can be understood that the modem processor may alternatively be not integrated in the processor 910.

The radio frequency unit 901 is configured to send first target data on a common data radio bearer DRB based on a target mode, where the first target data is non-control plane data; and the target mode includes any one of a two-step random access mode and a four-step random access mode, the common DRB is used for transmitting the non-control plane data by a plurality of terminals, and the plurality of terminals include the first terminal.

It can be understood that for the implementation processes of the implementations provided in this embodiment, reference may be made to descriptions in the foregoing method embodiments 200 to 500, with the same technical effect achieved. To avoid repetition, details are not repeated herein.

An embodiment of this application further provides a network-side device, including a processor and a communication interface, where the communication interface is coupled to the processor, and the processor is configured to run a program or instructions to implement the steps of the method embodiments 600. The network-side device embodiments correspond to the foregoing network-side device method embodiments, and the implementation processes and implementations of the foregoing method embodiments can be applied to the network-side device embodiments, with the same technical effects achieved.

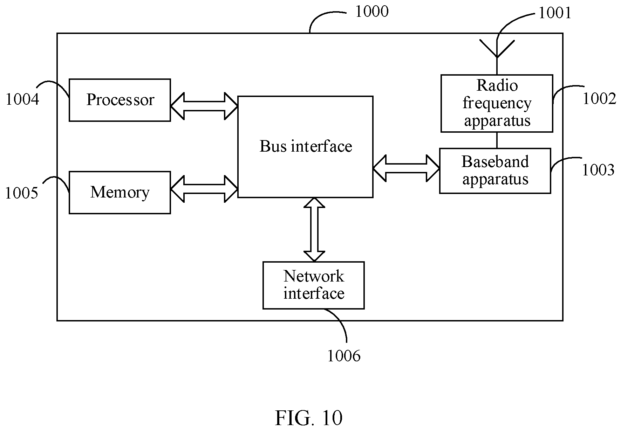

Specifically, an embodiment of this application further provides a network-side device. As shown in FIG. 10, the network-side device 1000 includes an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information out by using the antenna 1001.

The method executed by the network-side device in the foregoing embodiments can be implemented in the baseband apparatus 1003, and the baseband apparatus 1003 includes a baseband processor.

The baseband apparatus 1003 may include, for example, at least one baseband board, where a plurality of chips are disposed on the baseband board. As shown in FIG. 10, one of the chips is, for example, a baseband processor, and is connected to the memory 1005 through the bus interface, to invoke a program in the memory 1005 to perform the operations of the network device shown in the foregoing method embodiments.

The network-side device may further include a network interface 1006, where the interface is, for example, a common public radio interface (Common Public Radio Interface, CPRI).

Specifically, the network-side device 1000 in this embodiment of the present invention further includes: instructions or a program stored in the memory 1005 and executable on the processor 1004. The processor 1004 invokes the instructions or program in the memory 1005 to execute the method executed by the modules shown in FIG. 8, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the data transmission method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions of a network-side device to implement the processes of the foregoing data transmission method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product includes a processor, a memory, and a program or instructions stored in the memory and executable on the processor, and when the program or the instructions are executed by the processor, the processes of the foregoing embodiments of the data transmission method are implemented, with the same technical effects achieved. To avoid repetition, details are not described herein again.

An embodiment of this application further provides a wireless communication system, which includes a terminal and a network-side device, where the terminal can be configured to execute the steps in the above method embodiments 200 to 500, and the network-side device can be configured to execute the steps in the above method embodiments 200 to 500.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A data transmission method, comprising:
sending, by a first terminal, first target data on a common data radio bearer DRB based on a target mode, wherein the first target data is non-control plane data; and
the target mode comprises any one of a two-step random access mode and a four-step random access mode, the common DRB is used for transmitting the non-control plane data by a plurality of terminals, and the plurality of terminals comprise the first terminal.

2. The method according to claim 1, wherein a time-domain position of a message MsgA in the two-step random access mode is determined based on an action trigger time of the first target data, an MsgB corresponding to the two-step random access mode carries at least first contention resolution related information, and the first contention resolution related information is determined by a network-side device based on at least part of a received first target data; and
a time-domain position of an Msg1 in the four-step random access mode is determined based on the action trigger time of the first target data.

3. The method according to claim 2, wherein before the step of sending, by a first terminal, first target data on a common DRB based on a target mode, the method further comprises:
selecting, by the first terminal, from at least one uplink resource, an uplink resource whose time domain information is closest to the action trigger time of the first target data as a target uplink resource; or determining, by the first terminal, a target time window closest to the action trigger time of the first target data and selecting, from the at least one uplink resource, at least one uplink resource with time domain information being within the target time window as the target uplink resource; and
the sending, by a first terminal, first target data on a common data radio bearer DRB based on a target mode comprises:
sending, by the first terminal, the first target data on the common DRB based on the target mode by using the target uplink resource; wherein
the target uplink resource corresponds to the MsgA or the Msg1.

4. The method according to claim 3, wherein in a case that there are a plurality of uplink resources with different resource sizes, the uplink resources correspond to resource usage conditions; and
the sending, by the first terminal, the first target data on the common DRB based on the target mode by using the target uplink resource comprises:
sending, by the first terminal, the first target data on the common DRB based on the target mode by using the target uplink resource meeting the resource usage condition.

5. The method according to claim 4, wherein the resource usage condition is determined at least based on a reference signal received power RSRP.

6. The method according to claim 2, wherein the MsgB in the two-step random access mode further carries at least one of the following:
a timing advance TA, wherein the TA is used for establishing and maintaining uplink synchronization;
uplink resource allocation information, wherein the uplink resource allocation information is used for sending second target data on the common DRB;
a first temporary radio network temporary identifier RNTI, wherein the first temporary RNTI is used for scheduling at least one piece of second target data on the first terminal; and
first configuration information, wherein the first configuration information comprises at least one of transmission power control TPC and a hybrid automatic repeat request HARQ feedback related indication; wherein
an action trigger time of the second target data is after the action trigger time of the first target data.

7. The method according to claim 2, wherein an Msg2 in the four-step random access mode carries at least a second temporary RNTI, and the second temporary RNTI is used for scheduling at least one piece of second target data on the first terminal; and/or
an Msg4 in the four-step random access mode carries at least second contention resolution related information, and the second contention resolution related information is determined by the network-side device based on at least part of the received first target data.

8. The method according to any one of claims 1 to 7, wherein the first target data transmitted based on the common DRB does not carry or correspond to identification information, and the identification information is used to identify the first terminal.

9. The method according to any one of claims 1 to 8, wherein in a case that the first target data comprises a single data packet, a transport block for carrying the first target data further comprises a first indication field and/or a second indication field, wherein the first indication field is used for indicating a length of the first target data and the second indication field is used for indicating padding information in the transport block;
or
in a case that the first target data comprises a plurality of data packets, the plurality of data packets are distinguished by length indicator information LI.

10. The method according to any one of claims 1 to 9, wherein the step of sending, by a first terminal, first target data on a common DRB based on a target mode comprises:
for the first target data, in a case that the first terminal needs to perform a plurality of data transmissions on the common DRB, performing, by the first terminal, a first transmission to the network-side device based on the target mode; and
in a case that the first transmission is successful and the first terminal receives a target temporary RNTI fed back by the network-side device, performing, by the first terminal based on the target temporary RNTI, subsequent transmissions other than the first transmission in the plurality of transmissions, wherein the target temporary RNTI is the first temporary RNTI or the second temporary RNTI.

11. The method according to claim 10, wherein a plurality of data packets comprised in the plurality of data transmissions on the common DRB are associated and identified by at least one of the following:
a local identifier of a terminal;
an identifier randomly allocated by the network-side device;
a sequence number SN;
a packet number field, wherein the packet number field is located in at least one first data packet, the first data packet belongs to the plurality of data packets, and a sending time of the first data packet is earlier than a sending time of another data packet other than the first data packet in the plurality of data packets; and
a first timer, wherein the first timer is started in a case that the network-side device receives the first second data packet, the second data packet is transmitted on a first resource or the second data packet carries a local identifier of the first terminal, and expiration of the first timer indicates that data packet transmission associated with the second data packet ends.

12. The method according to claim 11, wherein the SN comprises at least a start marker and/or an end marker.

13. The method according to claim 10, wherein the method further comprises:
sending, by the first terminal, a buffer status report BSR to the network-side device, wherein the BSR is used to inform the network-side device of an amount of to-be-transmitted data on the first terminal, and a transmission occasion of the BSR comprises at least one of the following:
the first transmission in the plurality of data transmissions on the common DRB;
that compared with a previous BSR report, the amount of to-be-transmitted data on the first terminal has changed;
that an uplink resource scheduled by the network-side device is not large enough to carry scheduling data, but is large enough to carry one BSR;
that all data buffered in the first terminal have been sent and there are still uplink resources left, wherein a buffer size in the BSR is 0, or the BSR comprises at least first indication information, and the first indication information is used to indicate that all the data buffered in the first terminal have been sent; and
that data for sending is not present on an uplink resource scheduled by the network-side device based on the target temporary RNTI, wherein the buffer size in the BSR is 0, or the BSR comprises at least second indication information, and the second indication information is used to indicate that all the data buffered in the first terminal has been sent.

14. The method according to any one of claims 1 to 13, wherein before the step of sending, by a first terminal, first target data on a common DRB based on a target mode, the method further comprises:
obtaining, by the first terminal, second configuration information; wherein
the second configuration information comprises at least one of the following:
that the network-side device supports data transmission on a common DRB in a random access mode; and
that the network-side device supports data transmission on a common DRB in a shared resource transmission mode; wherein
the random access mode comprises the two-step random access mode and/or the four-step random access mode, and the data transmission on the common DRB comprises a single data transmission on the common DRB and/or a plurality of data transmissions on the common DRB.

15. The method according to claim 14, wherein the step of sending, by a first terminal, first target data on a common DRB based on a target mode comprises:
in a case that the second configuration information comprises the network-side device supporting data transmission on the common DRB in the random access mode and the random access mode comprises the two-step random access mode and the four-step random access mode, performing, by the first terminal, any one of the following:
determining, based on link quality, whether to send the first target data on the common DRB based on the two-step random access mode or the four-step random access mode;
determining, based on a type of the common DRB, whether to send the first target data on the common DRB based on the two-step random access mode or the four-step random access mode;
determining, based on a quality of service QoS parameter for the common DRB, whether to send the first target data on the common DRB based on the two-step random access mode or the four-step random access mode; and
in a case that the first target data is sent M times based on a first random access mode and none of the transmissions is successful, sending the first target data on the common DRB based on a random access mode other than the first random access mode, wherein the first random access mode is the two-step random access mode or the four-step random access mode, and M is greater than or equal to 1.

16. The method according to claim 14, wherein the step of sending, by a first terminal, first target data on a common DRB based on a target mode comprises:
in a case that the second configuration information comprises the network-side device supporting data transmission on the common DRB in the random access mode and the network-side device supporting data transmission on the common DRB in the shared resource transmission mode, performing, by the first terminal, any one of the following:
in a case that the first terminal is in a valid area corresponding to the shared resource transmission mode and the network-side device indicates the first terminal not to maintain an uplink synchronization variable, sending, by the first terminal, the first target data on the common DRB to the network-side device based on the shared resource transmission mode; and
in a case that the first terminal is not in the valid area corresponding to the shared resource transmission mode, performing, by the first terminal, data transmission first on the common DRB based on the random access mode and obtaining an uplink synchronization variable, and then sending the first target data or the second target data on the common DRB based on the uplink synchronization variable and the shared resource transmission mode, wherein the action trigger time of the second target data is later than the action trigger time of the first target data; wherein
a shared resource corresponding to the shared resource transmission mode is used for transmitting non-control plane data by the plurality of terminals, and the uplink synchronization variable comprises at least a TA.

17. The method according to claim 14, wherein the step of sending, by a first terminal, first target data on a common DRB based on a target mode comprises:
in a case that the data transmission of the common DRB comprises a single data transmission on the common DRB and the plurality of data transmissions on the common DRB, performing, by the first terminal, any one of the following:
in a case that a data amount of the first target data is less than a first threshold, transmitting, by the first terminal, the first target data based on the single data transmission on the common DRB;
in a case that the data amount of the first target data is greater than a second threshold, transmitting, by the first terminal, the first target data based on the plurality of data transmissions on the common DRB; and
determining, by the first terminal based on uplink resources respectively associated with the single data transmission on the common DRB and the plurality of data transmissions on the common DRB, whether to transmit the first target data based on the single data transmission on the common DRB or the plurality of data transmissions on the common DRB.

18. The method according to any one of claims 1 to 17, wherein the step of sending, by a first terminal, first target data on a common DRB based on a target mode comprises any one of the following:
for the first target data, in a case that the first terminal performs a single data transmission on a common DRB in a source cell and the transmission has not been completed, performing, by the first terminal, a single data transmission on a common DRB again after having reselected onto or handed over to a target cell;
for the first target data, in a case that the first terminal performs a plurality of data transmissions on the common DRB in the source cell and has reselected onto or handed over to a target cell during the transmission period, performing, by the first terminal, a plurality of data transmissions on a common DRB in the target cell; and
for the first target data, in a case that the first terminal performs a plurality of data transmissions on the common DRB in the source cell and has reselected onto or handed over to the target cell during the transmission period, continuing, by the first terminal based on the plurality of data transmissions on the common DRB, to send in the target cell other data that has not been sent completely in the first target data, wherein each piece of data comprised in the plurality of data transmissions on the common DRB has self-parsing characteristics.

19. The method according to claim 18, wherein the method further comprises:
in a case that the first terminal has reselected onto or handed over to the target cell and a related configuration for data transmission on the common DRB in the target cell is different from a related configuration for data transmission on the common DRB in the source cell, obtaining, by the first terminal, the related configuration for data transmission on the common DRB in the target cell; and
based on the related configuration for data transmission on the common DRB in the target cell, performing, by the first terminal, a single data transmission on the common DRB again, or performing a plurality of data transmissions on the common DRB in the target cell, or performing the step of continuing, based on the plurality of data transmissions on the common DRB in the target cell, to send other data that has not been sent completely in the first target data.

20. The method according to any one of claims 1 to 19, wherein the method further comprises:
in a case that a current first state of the first terminal collides with a data transmission on the common DRB that needs to be executed currently, determining, by the first terminal based on at least one of the following, whether to process the first state or the data transmission on the common DRB:
being autonomously determined by the first terminal, wherein the first state comprises a connected state, an idle state, or an inactive state;
being determined by the first terminal based on a priority order between the first state and the data transmission on the common DRB;
in a case that the first state is a connected state, the first terminal processes the first state and processes the data transmission on the common DRB by multiplexing a unicast common DRB mode in the first state; and
in a case that the first state is an inactive state or an idle state, the first terminal processes the data transmission on the common DRB at other occasions than a first occasion, wherein the first occasion comprises at least one of paging occasion, system information SI monitoring occasion, measurement occasion, and change notification monitoring occasion.

21. The method according to any one of claims 1 to 20, wherein the method further comprises:
in a case that the first terminal sends the first target data on the common DRB for a plurality of times and the transmissions fail, or in a case that a second timer expires and the transmissions fail, performing, by the first terminal, at least one of the following:
entering, by the first terminal, a connected state, and sending first information to the network-side device, wherein the first information comprises at least data reporting failure information and/or a data reporting failure cause; and
recording, by the first terminal, a data reporting failure cause, and sending second information to the network-side device after entering the connected state, wherein the second information comprises at least data reporting failure information and/or the data reporting failure cause; wherein
the second timer is started by the terminal when the terminal starts to send the first target data on the common DRB.

22. The method according to any one of claims 1 to 21, wherein the method further comprises any one of the following:
releasing, by the first terminal, the target temporary RNTI in a case that the multiple data transmissions on the common DRB have been completed or all the data cached in the first terminal has been sent; and
releasing, by the first terminal, the target temporary RNTI in a case that a third timer expires, wherein the third timer is started when the first terminal triggers a last data transmission in the plurality of data transmissions on the common DRB.

23. A data transmission method, comprising:
receiving, by a network-side device, first target data that is sent by a first terminal on a common data radio bearer DRB based on a target mode; wherein
the first target data is non-control plane data, the target mode comprises any one of a two-step random access mode and a four-step random access mode, the common DRB is used for transmitting the non-control plane data by a plurality of terminals, and the plurality of terminals comprise the first terminal.

24. The method according to claim 23, wherein a time-domain position of a message MsgA in the two-step random access mode is determined based on an action trigger time of the first target data, an MsgB corresponding to the two-step random access mode carries at least first contention resolution related information, and the first contention resolution related information is determined by a network-side device based on at least part of a received first target data; and
a time-domain position of an Msg1 in the four-step random access mode is determined based on the action trigger time of the first target data.

25. The method according to claim 24, wherein the MsgB in the two-step random access mode further carries at least one of the following:
a timing advance TA, wherein the TA is used for establishing and maintaining uplink synchronization;
uplink resource allocation information, wherein the uplink resource allocation information is used for sending second target data on the common DRB;
a first temporary radio network temporary identifier RNTI, wherein the first temporary RNTI is used for scheduling at least one piece of second target data on the first terminal; and
first configuration information, wherein the first configuration information comprises at least one of transmission power control TPC and a hybrid automatic repeat request HARQ feedback related indication; wherein
an action trigger time of the second target data is after the action trigger time of the first target data.

26. The method according to claim 24, wherein an Msg2 in the four-step random access mode carries at least a second temporary RNTI, and the second temporary RNTI is used for scheduling at least one piece of second target data on the first terminal; and/or
an Msg4 in the four-step random access mode carries at least second contention resolution related information, and the second contention resolution related information is determined by the network-side device based on at least part of the received first target data.

27. The method according to any one of claims 23 to 26, wherein the first target data transmitted based on the common DRB does not carry or correspond to identification information, and the identification information is used to identify the first terminal.

28. The method according to any one of claims 23 to 27, wherein in a case that the first target data comprises a single data packet, a transport block for carrying the first target data further comprises a first indication field and/or a second indication field, wherein the first indication field is used for indicating a length of the first target data and the second indication field is used for indicating padding information in the transport block;
or
in a case that the first target data comprises a plurality of data packets, the plurality of data packets are distinguished by length indicator information LI.

29. The method according to any one of claims 23 to 28, wherein the step of receiving, by a network-side device, first target data on a common DRB comprises:
receiving, by the network-side device, a first transmission that is performed for the first target data by the first terminal to the network-side device based on the target mode; and
sending, by the network-side device, a target temporary RNTI, and scheduling, based on the target temporary RNTI, subsequent transmissions other than the first transmission in a plurality of transmissions on the common DRB, wherein the target temporary RNTI is the first temporary RNTI or the second temporary RNTI.

30. The method according to claim 29, wherein a plurality of data packets comprised in the plurality of data transmissions on the common DRB are associated and identified by at least one of the following:
a local identifier of a terminal;
an identifier randomly allocated by the network-side device;
a sequence number SN;
a packet number field, wherein the packet number field is located in at least one first data packet, the first data packet belongs to the plurality of data packets, and a sending time of the first data packet is earlier than a sending time of another data packet other than the first data packet in the plurality of data packets; and
a first timer, wherein the first timer is started in a case that the network-side device receives the first second data packet, the second data packet is transmitted on a first resource or the second data packet carries a local identifier of the first terminal, and expiration of the first timer indicates that data packet transmission associated with the second data packet ends.

31. The method according to claim 30, wherein the SN comprises at least a start marker and/or an end marker.

32. The method according to claim 29, wherein the method further comprises:
receiving, by the network-side device, a buffer status report BSR, wherein the BSR is used to inform the network-side device of an amount of to-be-transmitted data on the first terminal; and
scheduling, by the network-side device based on the BSR, the subsequent transmissions other than the first transmission in the plurality of transmissions on the common DRB; wherein
a transmission occasion of the BSR comprises at least one of the following:
the first transmission in the plurality of data transmissions on the common DRB;
compared with a previous BSR report, the amount of to-be-transmitted data on the first terminal has changed;
an uplink resource scheduled by the network-side device is not large enough to carry scheduling data, but is large enough to carry one BSR;
all data buffered in the first terminal have been sent and there are still uplink resources left, wherein a buffer size in the BSR is 0, or the BSR comprises at least first indication information, and the first indication information is used to indicate that all the data buffered in the first terminal have been sent; and
data for sending is not present on an uplink resource scheduled by the network-side device based on the target temporary RNTI, wherein the buffer size in the BSR is 0, or the BSR comprises at least second indication information, and the second indication information is used to indicate that all the data buffered in the first terminal has been sent.

33. The method according to any one of claims 23 to 32, wherein before the step of receiving, by a network-side device, first target data on a common data radio bearer DRB, the method further comprises:
sending, by the network-side device, second configuration information; wherein
the second configuration information comprises at least one of the following:
the network-side device supports data transmission on a common DRB in a random access mode; and
the network-side device supports data transmission on a common DRB in a shared resource transmission mode; wherein
the random access mode comprises the two-step random access mode and/or the four-step random access mode, and the data transmission on the common DRB comprises a single data transmission on the common DRB and/or the plurality of data transmissions on the common DRB.

34. The method according to any one of claims 23 to 33, wherein the method further comprises:
receiving, by the network-side device, first information or second information, wherein the first information or the second information comprises at least data reporting failure information and/or a data reporting failure cause.

35. The method according to any one of claims 23 to 34, wherein the method further comprises any one of the following:
releasing, by the network-side device, the target temporary RNTI in a case that a fourth timer expires, wherein the fourth timer is started when the network-side device receives data corresponding to the temporary RNTI for the last time.

36. The method according to any one of claims 23 to 35, wherein the method further comprises:
in a case that the network-side device is an access network device, sending, by the access network device, the first target data to a core network device based on a common pipeline; wherein
the first target data transmitted based on the common pipeline does not carry or correspond to identification information, and the identification information is used to identify the first terminal.

37. A data transmission apparatus, comprising:
a first transmission module, configured to send first target data on a common data radio bearer DRB based on a target mode, wherein the first target data is non-control plane data; wherein
the target mode comprises any one of a two-step random access mode and a four-step random access mode, the common DRB is used for transmitting the non-control plane data by a plurality of terminals, and the plurality of terminals comprise the first terminal.

38. A data transmission apparatus, comprising:
a second transmission module, configured to receive first target data that is sent by a first terminal on a common data radio bearer DRB based on a target mode; wherein the target mode comprises any one of a two-step random access mode and a four-step random access mode, the common DRB is used for transmitting the non-control plane data by a plurality of terminals, and the plurality of terminals comprise the first terminal.

39. A terminal, comprising a processor, a memory, and a program or instructions stored in the memory and executable on the processor, wherein when the program or the instructions are executed by the processor, the steps of the data transmission method according to any one of claims 1 to 22 are implemented.

40. A network-side device, comprising a processor and a memory, wherein the memory stores a program or instructions executable on the processor, and when the program or the instructions are executed by the processor, the steps of the data transmission method according to any one of claims 23 to 36 are implemented.

41. A readable storage medium, wherein the readable storage medium stores a program or instructions, and when the program or the instructions are executed by a processor, the steps of the data transmission method according to any one of claims 1 to 22 are implemented, or the steps of the data transmission method according to any one of claims 23 to 36 are implemented.
